# FASCICULE DE BREVET EUROPEEN

(11) **EP 2 250 425 B1**
(45) Date de publication et mention de la délivrance du brevet: **19.06.2013**
(21) Numéro de dépôt: 09708834.8
(22) Date de dépôt: 28.01.2009
(51) Int. Cl.: F17C 1/14, F17C 7/04, F17C 13/02

(54) **SYSTEME DE CHAUFFAGE DE STOCKAGES DE GAZ LIQUEFIES SOUS PRESSION**
SYSTEM ZUR BEHEIZUNG VON RESERVOIRS MIT FLÜSSIGEM DRUCKGAS
SYSTEM FOR HEATING PRESSURISED LIQUEFIED GAS STORES

(30) Priorité: 06.02.2008 FR 0850751
(43) Date de publication de la demande: 17.11.2010
(73) Titulaire: L'Air Liquide Société Anonyme pour l'Etude et l'Exploitation des Procédés Georges Claude, 75007 Paris (FR)
(72) Inventeur: BARBIER, Jean-Paul, F-78112 Fourqueux (FR)
(74) Mandataire: Mellul-Bendelac, Sylvie Lisette
(86) Numéro de dépôt international: PCT/FR2009/050125
(87) Numéro de publication internationale: WO 2009/098425

(56) Documents cités:
- FR-A- 2 893 116
- US-A1- 2002 124 575

## Description

La présente invention concerne un dispositif de stockage de gaz liquéfié sous pression notamment l'ammoniac ou le chlore et de distribution dudit gaz à débit élevé, sous forme de gaz de haute pureté. Par débit élevé on entend un débit supérieur ou égal à 1 kg/h et de préférence supérieur à 10kg/h.

Certaines industries comme la fabrication de semi-conducteurs, de cellules solaires ou encore de fibres optiques sont aujourd'hui confrontées à des besoins croissants en gaz de haute pureté à diverses étapes de fabrication. Certains de ces gaz tels HCl, Cl₂, HBr, N₂O, NH₃, WF₆, BCl₃, 3MS, pour n'en citer que quelques-uns, sont liquéfiés à température ambiante, et posent de ce fait des difficultés pour leur distribution. Ces difficultés sont directement liées à leur pression et/ou à leur débit d'utilisation.

Un gaz liquéfié est composé de deux phases liquide et gazeuse en équilibre l'une avec l'autre. Cet équilibre implique qu'à une température donnée, un gaz liquéfié a une pression bien déterminée et que cette pression varie en fonction de la température selon une relation qui est propre à chaque gaz. En effet, la pression augmente à mesure que la température augmente et inversement.

Lorsque l'on soutire la phase gazeuse d'un récipient de gaz liquéfié, une partie du liquide doit être transformée en gaz de manière à régénérer le gaz à mesure qu'il est utilisé afin de maintenir l'équilibre. Le liquide se met donc à bouillir en utilisant l'énergie disponible (typiquement l'énergie du milieu extérieur autour du récipient). Plus le débit de soutirage est élevé, plus ce besoin d'énergie est important et plus le liquide bout violemment et crée ainsi un risque important d'entraînement de gouttelettes chargées d'impuretés dans la phase gazeuse. Ces gouttelettes, non seulement contaminent le gaz, mais elles accélèrent également les phénomènes de corrosion et provoquent des instabilités au niveau de la régulation de débit et des mesures de pression. Si l'énergie disponible n'est pas suffisante pour gazéifier le liquide et régénérer ainsi la phase vapeur, la température - et donc la pression - chutent puisque l'équilibre doit être maintenu.

Dans le cas de l'ammoniac liquéfié sous pression (le raisonnement serait identique avec un autre gaz), la vaporisation de la phase liquide d'ammoniac à une température de 20°C, sa tension de vapeur étant de 8,7 bar, s'accompagne d'une production de frigories 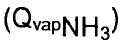 d'environ 250 kcal par kilogramme d'ammoniac. Ainsi une vaporisation d'ammoniac à un débit de 100 kg/h correspond à une production de frigories de 25 000 kcal/h.

Dans un ISO-conteneur de 20 000 kg d'ammoniac cette production de frigories a pour effet d'abaisser la température (T) d'ammoniac de 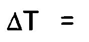 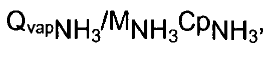 M_{NH₃} étant la masse totale d'ammoniac dans l'ISO-conteneur et Cp_{NH₃} sa chaleur spécifique à sa tension de vapeur: Cp_{NH₃} = 1,1 kcal/kg.°K à 8,7 bar. Aussi la vaporisation de 100 kg/h d'ammoniac fera abaisser sa température d'environ 1,1°C par heure (ΔT = 25 000/20 000 x 1,1).

On peut donc aboutir à des températures extrêmement basses. La tendance dans l'industrie est d'exiger des débits plus élevés de gaz et de plus grands récipients, ce qui augmente les problèmes de refroidissement. En utilisant de plus grands récipients de gaz liquéfiés sous pression, on élimine le support et l'entretien de nombreux petits récipients et l'espace est conservé. De plus, la fréquence de changement de récipient est diminuée, abaissant ainsi le risque de fuites de gaz plus fréquentes lors des étapes de connexions et déconnexions des récipients.

Il résulte de ce refroidissement un abaissement de la tension de vapeur du gaz. Par exemple, pour de l'ammoniac, la tension de vapeur ne sera plus que de 6,3 bar à 15°C, de 4,3 bar à 0°C, et de 2 bar à -20°C.

Pour maintenir une pression constante de gaz au point d'utilisation il faut donc maintenir sa température constante. Pour cela il est nécessaire d'apporter une quantité de chaleur au moins égale à la production de frigories (Q_{vap_{gaz}}).

Un apport extérieur d'énergie par chauffage permet de limiter le refroidissement et la chute de pression observés. Plusieurs solutions sont alors envisageables.

Une première solution couramment utilisée consiste à chauffer le récipient de gaz sur toute sa hauteur en maintenant une température de chauffe constante supérieure à la température ambiante. Cette solution nécessite un traçage complet de l'installation en aval du récipient puisque le gaz sort du récipient à une température supérieure à la température ambiante. T3n effet, en appliquant une telle solution, la canalisation de transport du gaz, à température ambiante, créerait des condensations et donc engendrerait la présence d'un liquide dans la canalisation, ce qui n'est pas acceptable car cela provoquerait notamment des hétérogénéités de débit de produit.

Dans la demande de brevet EP 1538390, un système de chauffage par induction d'une bouteille contenant du gaz liquéfié est décrit. La demande de brevet EP 1298381 décrit un dispositif de chauffage d'un récipient de gaz liquéfié sous pression, le dispositif de chauffage est en contact permanent avec ledit récipient et est constitué de moyens électriques de chauffage. La demande de brevet US 2002/0124575 décrit un procédé de contrôle de la température d'un gaz liquéfié sous pression situé dans un dispositif de stockage chauffé par une source de chaleur extérieure audit dispositif de stockage.

Cependant de tels dispositifs ne sont pas encore satisfaisants. En effet, les gaz utilisés dans les applications décrites ci-dessus, sont corrosifs et inflammables, or avec un système de chauffage électrique un risque d'explosion lié aux fuites de tels gaz n'est pas à exclure. D'autre part il est impossible, par exemple, d'utiliser un système d'arrosage refroidissant, en cas de nécessité, à cause de ces systèmes électriques. Les risques de brûlures, de corrosion du récipient de stockage et d'électrocution sont également hautement probables. D'autre part les actions de nettoyage, de maintenance et de remplacement de matériels en cas de panne sont complexes, risquées et onéreuses.

Le document FR-2 893 116 décrit un réservoir cryogénique comportant une enveloppe intérieure destinée à contenir un fluide, par exemple un mélange d'hydrogène liquide et gazeux. Ce réservoir comporte un tube de soutirage de gaz et un tube de réchauffage de l'hydrogène liquide contenu dans le réservoir, les deux tubes débouchant dans l'enveloppe intérieure du réservoir, le tube de réchauffage créant un circuit de réchauffage au sein de la masse de cryogène.

Un but de la présente invention est de pallier tout ou partie des inconvénients de l'art antérieur relevés ci-dessus.

A cette fin, la présente invention a pour principal objet un dispositif de stockage et de distribution à un débit supérieur ou égal à 1kg/h d'un gaz liquéfié sous pression de haute pureté tel que définie par la revendication 1.

Par ailleurs, des modes de réalisation de l'invention peuvent comporter l'une ou plusieurs des caractéristiques suivantes :
Le dispositif défini précédemment est caractérisé en ce que ledit circuit comprend des tubulures sur la surface extérieure S du récipient. De préférence, les tubulures sont soudées sur la surface extérieure du récipient.
Le dispositif défini précédemment est caractérisé en ce que les tubulures et le récipient sont en acier inoxydable.
Le dispositif défini précédemment est caractérisé en ce que le système de chauffage est réparti sur le quart inférieur de la surface extérieure du récipient.
Le dispositif défini précédemment est caractérisé en ce que le débit du gaz soutiré est compris entre 1 kg/h et 100 kg/h, de préférence entre 10 kg/h et 50 kg/h.
Le dispositif défini précédemment est caractérisé en ce que la capacité du récipient est comprise entre 1 tonne et 100 tonnes, de préférence entre 10 tonnes et 40 tonnes.
Le dispositif défini précédemment est caractérisé en ce qu'un indicateur de niveau de liquide est présent dans le récipient.
Le dispositif défini précédemment est caractérisé en ce qu'il comprend un moyen, fonction de la pression du gaz, de régulation du débit de fluide F chaud circulant dans le système de chauffage.
Le dispositif défini précédemment est caractérisé en ce que la température du fluide F chaud est inférieure ou égale à 50°C.
Les dispositifs de distribution de liquides chauds nécessitent un système de chauffage destiné à chauffer toute la surface du récipient contenant ledit liquide. Les liquides n'ont pas, comme dans le cas des gaz liquéfiés sous pression, de tension de vapeur significative et il est donc possible de les chauffer à des températures plus élevées que 50°C. Les applications des deux dispositifs sont donc totalement distinctes et les domaines technologiques trop éloignés pour comparer les différents types de dispositifs et leurs composants.
Le dispositif défini précédemment est caractérisé en ce qu'il comprend un système d'isolation recouvrant au moins la partie de la surface extérieure S du récipient sur laquelle est intégré le système de chauffage.
Le dispositif défini précédemment est caractérisé en ce que le gaz liquéfié sous pression de haute pureté est de l'ammoniac.

Selon un mode préféré de la présente invention, les tubulures du circuit de chauffage et le récipient du dispositif tel que défini ci-dessus sont constitués dans un même matériau. Ledit matériau peut être le cuivre et de manière préférée, ledit matériau est un acier inoxydable.

Le fluide chaud F circulant dans le circuit du système de chauffage du dispositif défini ci-dessus est choisi parmi l'eau, l'huile ou un autre fluide porteur de chaleur. De préférence ledit fluide est l'eau.

Selon un mode particulier de la présente invention, le récipient du dispositif défini ci-dessus est un récipient monté sur un châssis de semi-remorque. De préférence ledit récipient est un iso conteneur.

Par gaz de haute pureté on entend un gaz dont la pureté est supérieure ou égale à 99,99%, de préférence supérieure ou égale à 99,999% et encore plus préférentiellement supérieure ou égale à 99,9999%.

Selon un mode de réalisation du dispositif objet de la présente invention, un moyen de recyclage du fluide chaud est situé en sortie du circuit du système de chauffage.

D'autres particularités et avantages apparaîtront à la lecture de la description ci-après, faite en référence aux figures dans lesquelles :
- la figure 1 représente une vue en coupe longitudinale et schématique d'un dispositif selon l'invention.
- La figure 2 représente une vue en perspective d'une coupe transversale selon la ligne A d'un détail du dispositif représenté à la figure 1.
- La figure 3 représente une vue en coupe transversale et schématique d'un autre exemple de réalisation d'un dispositif selon l'invention.
- La figure 4 représente une vue schématique d'un détail des dispositifs représentés aux figures 1 à 3, illustrant des tubulures du système de chauffage intégré au récipient du dispositif selon l'invention.

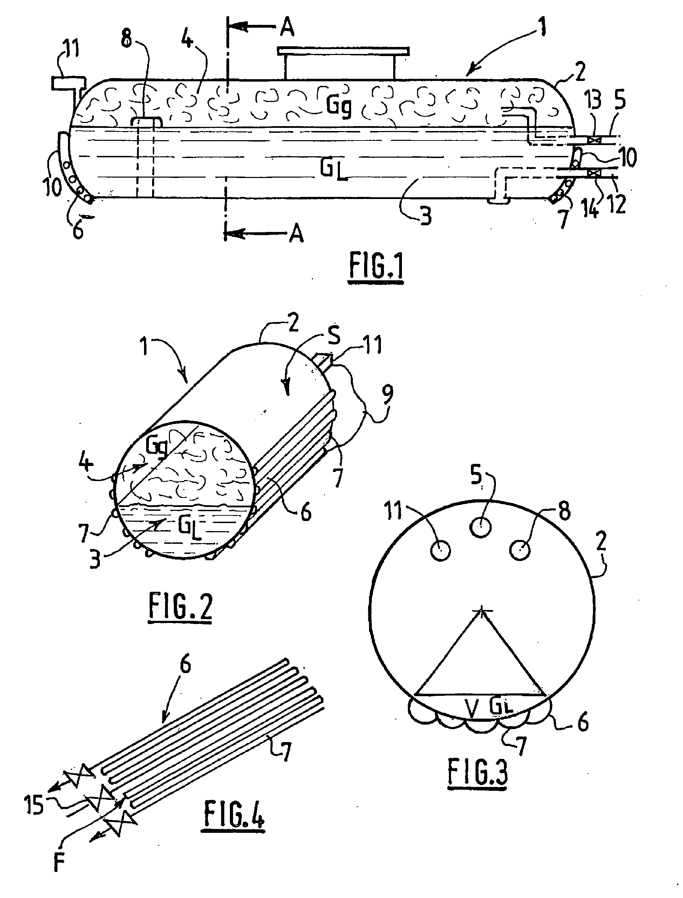

Sur la figure 1 est représenté un dispositif 1 de stockage et de distribution de gaz liquéfié sous pression comprenant un récipient 2. La partie inférieure 3 du récipient 2 est remplie par la phase liquéfiée G_{L} du gaz stocké et la partie supérieure 4 est remplie par la phase gazeuse G_{g} du gaz stocké. Un système de soutirage 5 est également présent sur la partie supérieure du récipient 2. Ce système de soutirage 5 est destiné à soutiré de la phase gazeuse G_{g} du gaz liquéfié sous pression corrosif utilisé pour les applications liées au dispositif de la présente invention. Le système de soutirage 5 est par exemple constitué d'un tuyau situé dans la partie supérieure 4 à l'intérieur du récipient 2. Ainsi, grâce à un tel système de soutirage 5, les impuretés dissoutes dans la phase liquide ne sont pas entraînées.

Le récipient 2 pouvant comporter des gaz corrosifs, par exemple de l'ammoniac, doit être constitué d'un matériau compatible et non corrodé par ledit gaz. Ainsi, le récipient 2 est par exemple en acier inoxydable, l'acier inoxydable 304 est particulièrement bien adapté. Le récipient 2 est de grande capacité, il s'agit par exemple d'un ISO conteneur pouvant contenir de 10 à 50 tonnes de gaz corrosif liquéfié sous pression, de façon à ne le remplir ou à n'en changer qu'une ou deux fois par mois pour limiter la fréquence de cette opération délicate sur le plan sécurité.

Le dispositif 1 comprend un système de chauffage 6 intégré au récipient 2. Le système de chauffage 6 a pour fonction de compenser le refroidissement du liquide G_{L} dû à la vaporisation et éviter ainsi une baisse de pression de la phase gazeuse G_{g}. De manière préférée, le système de chauffage 6 est situé sur la partie inférieure de la surface extérieure du récipient 2, comme représenté sur la figure 1. Cette structure a alors pour but de chauffer uniquement la phase liquide G_{L} pour limiter le transfert des impuretés dissoutes dans la phase liquide G_{L} vers la phase gazeuse G_{g}, par recondensation partielle de la phase gazeuse G_{g} non chauffée entraînant d'éventuelles impuretés de nouveau vers la phase liquide G_{L}.

Le dispositif 1 est muni de vannes 13 et 14 contrôlant l'entrée de gaz liquéfié G_{L} par le conduit 12 et de sortie de gaz par le tuyau 5.

Le dispositif représenté sur la figure 1 comprend également un indicateur 8 de niveau de liquide contenu dans le récipient 2. Cet indicateur 8 a pour fonction d'informer l'utilisateur du niveau du liquide restant dans la partie inférieure 3 du récipient 2. Ainsi ledit utilisateur peut agir de manière à laisser du liquide résiduel (par exemple 10 %) de façon à empêcher les impuretés dissoutes dans la phase liquide d'être entraînées dans la phase gazeuse si le liquide se vaporise totalement. En variante, le dispositif 1 peut comprendre un système de pesée du récipient 2 à la place de l'indicateur de niveau 8.

En variante, un système d'isolation thermique 10 est installé pour recouvrir le système de chauffage 6 intégré au récipient 2. Une première technique d'isolation thermique appliquée au récipient 2 comprend les étapes suivantes :
étape a) : Mise en place d'une enveloppe étanche rigide, par exemple en aluminium ou en PVC, à l'extérieur du récipient 2 à une distance comprise entre 50mm et 200mm.
étape b) : Injection de polyuréthane à l'intérieur de la double enveloppe formée à l'étape a).

Une autre technique d'isolation thermique appliquée au récipient 2 comprend les étapes suivantes :
étape a) : Collage sur l'extérieur du récipient 2, de plaques en matériau isolant, par exemple du polyuréthane massif, ayant une épaisseur comprise entre 50mm et 200mm.
étape b) : Mise en place d'une enveloppe, par exemple en aluminium ou en PVC sur ces plaques.

Un capteur de pression 11 peut également être présent. Ce capteur 11 est relié par un moyen de connexion 9 au système de chauffage 6, comme représenté à la figure 2.

Sur la figure 2 est représenté un dispositif 1 comprenant un récipient 2 ayant une surface S sur laquelle est soudé un circuit 6 constitué de tubulures 7 dans lesquelles circule un fluide chaud F.

Les tubulures 7 sont représentées à la figure 4, le fluide chauffé F entrant dans les tubulures comme l'indique la flèche sur la figure 3. Le débit de fluide chauffé F est régulé au moyen d'une vanne de régulation 15 en fonction de la pression du gaz qui est liée à sa température. La pression du gaz est choisie de façon à ne pas avoir de condensation dans les tuyauteries en aval du récipient 2. La pression est mesurée par l'intermédiaire du capteur de pression 11.

La circulation de fluide F est arrêtée lorsque la pression de vapeur du gaz corrosif liquéfié correspond à une température de la phase liquide de 50°C et/ou dès que le niveau de liquide résiduel ne représente plus que 10 % du volume initial.

Le système de chauffage 6 peut recouvrir de 5% à 90% de la surface du récipient 2, de préférence de 10% à 50% de la surface extérieure. De manière particulièrement préférée, le système de chauffage recouvre le quart inférieur de la surface extérieure S du récipient 2, comme illustré sur la figure 3. Dans cet exemple de réalisation, la circulation de fluide chaud F a lieu dans des tubulures 7 soudées sur le quart inférieur de la surface S extérieure du récipient 2, pour ne chauffer que le volume V de la phase liquide jusqu'à 90 % d'utilisation. Le liquide plus chaud en bas, remonte vers le haut par gravité et convection. Selon un mode particulier de l'invention, les tubulures 7 sont en acier inoxydable et sont soudées sur la surface extérieure S du récipient 2 également en acier inoxydable.

Dans le cas où le fluide F est l'eau, l'apport de chaleur se fait par circulation d'eau préalablement chauffée, à une température maximale de 50°C (Tᵢ), dans les tubulures 7 soudées sur la surface S du récipient 2. La température de fluide chauffé F est limitée à 50°C pour ne pas créer de pression dangereuse de gaz lorsque le récipient est plein.

En considérant que la température de l'eau en sortie du système de chauffage 6 est de 30°C (Tf) et que les échanges de chaleur n'ont lieu qu'entre le gaz liquéfié sous pression et l'eau, nous pouvons établir : Q_{vap _{gaz}} = Mₑₐᵤ x Cpₑₐᵤ x (Tᵢ-T_{f}). Cela correspond à un débit d'eau pour l'exemple de l'ammoniac de

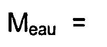

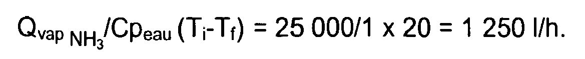

Un tel dispositif permet d'assurer à la fois une haute pureté de gaz corrosif en sortie du récipient et un grand débit de distribution de gaz.

La pureté des gaz fournis est un facteur critique pour un dispositif de distribution de gaz. En effet, les impuretés peuvent provenir de la matière première de départ, de sa contamination par l'air en cas de fuites, de la graisse ou d'huiles issues de la fabrication du récipient. Celui-ci doit donc être préalablement nettoyé, être compatible avec le gaz qu'il contient et nettoyé périodiquement de la corrosion des récipients par les gaz corrosifs qu'il contient. La corrosion provoquée par la phase liquide est plus rapide que celle provoquée par la phase gazeuse. Avec un système de chauffage 6 comme celui schématisé à la figure 3, 10% du liquide est chauffé, un gradient de température est alors présent. En effet, la température est de plus en plus élevée depuis la partie inférieure vers la partie supérieure du récipient. Or plus la température est grande, plus la corrosion est importante et les impuretés de corrosion dans la phase gazeuse sont alors moins nombreuses (de plusieurs ordres de grandeurs) que dans la phase liquide. Donc un système de chauffage selon l'invention permet de minimiser la contamination par impuretés métalliques, et par là de fournir un gaz de pureté élevée, par exemple 99,9999%, compatible avec les industries de l'électronique ou de l'optoélectronique.

Selon un mode particulier de l'invention, le système de chauffage 6 est mis en contact permanent avec la surface extérieure S du récipient 2 : par exemple par soudage ou par collage.

Le système de chauffage par circulation de fluide chaud dans des tubulures 7 intégrées sur la surface extérieure S du récipient 2 limite, au cours des changements de récipients, les manoeuvres de fixation de chauffage à des connexions de tuyaux d'arrivée de fluide chaud et de refoulement de fluide.

La température du fluide à 50°C n'engendre pas de risque de brûlure, ni d'électrocution.

Les risques d'explosion liés aux fuites de gaz inflammables (par exemple l'ammoniac) ne sont pas présents comme c'est le cas pour les chauffages électriques.

Il est possible d'utiliser, en cas de nécessité, des systèmes d'arrosage automatique du récipient 2 pour le refroidir, ce qui est plus difficile pour les chauffages électriques.

Le dispositif selon l'invention est applicable non seulement pour le stockage et la distribution d'ammoniac mais aussi dans toutes les applications concernant les gaz spéciaux employés notamment en électronique.

## Revendications

1. Dispositif (1) de stockage et de distribution à un débit supérieur ou égal à 1 kg/h d'un gaz liquéfié sous pression de haute pureté comprenant :
- un récipient (2) comportant dans sa partie inférieure (3) une phase liquéfiée (G_{L}) dudit gaz et dans sa partie supérieure (4) une phase gazeuse (G_{g}) dudit gaz,
- un système de soutirage (5) de la phase gazeuse (G_{g}) dudit gaz,
- un système de chauffage (6) destiné à maintenir une pression constante du gaz au point d'utilisation,
**caractérisé en ce que** le système de chauffage (6) consiste en une circulation d'un fluide (F) chaud dans un circuit intégré sur la surface extérieure (S) du récipient (2), circuit qui comprend des tubulures (7) sur la surface extérieure (S) du récipient (2).

2. Dispositif selon la revendication 1, **caractérisé en ce que** les tubulures (7) et le récipient (2) sont en acier inoxydable.

3. Dispositif selon l'une quelconque des revendications 1 ou 2, **caractérisé en ce que** le système de chauffage (6) est réparti sur le quart inférieur de la surface extérieure (S) du récipient (2).

4. Dispositif selon l'une quelconque des revendications 1 à 3, **caractérisé en ce que** le débit du gaz soutiré est compris entre 1 kg/h et 100 kg/h, de préférence entre 10 kg/h et 50 kg/h.

5. Dispositif selon l'une quelconque des revendications 1 à 4, **caractérisé en ce que** la capacité du récipient (2) est comprise entre 1 tonne et 100 tonnes, de préférence entre 10 tonnes et 40 tonnes.

## Patentansprüche

1. Vorrichtung (1), mittels welcher ein hochreines, unter Druck verflüssigtes Gas gespeichert und mit einer Flussrate von mindestens 1 kg/h abgegeben werden kann, umfassend:
- einen Behälter (2), der in seinem unteren Teil (3) eine verflüssigte Phase (G_{L}) des Gases und in seinem oberen Teil (4) eine gasförmige Phase (G_{g}) des Gases aufweist,
- ein System zum Abzapfen (5) der gasförmigen Phase (G_{g}) des Gases,
- ein Heizsystem (6), das dazu bestimmt ist, am Verwendungspunkt einen konstanten Druck des Gases aufrechtzuerhalten,
**dadurch gekennzeichnet, dass** das Heizsystem (6) darin besteht, dass ein warmes Fluid (F) in einem geschlossenen Kreislauf auf der Außenfläche (S) des Behälters (2) umgewälzt wird, wobei der Kreislauf Rohrleitungen (7) auf der Außenfläche (S) des Behälters (2) umfasst.

2. Vorrichtung nach Anspruch 1, **dadurch gekennzeichnet, dass** die Rohrleitungen (7) und der Behälter (2) aus nichtrostendem Stahl sind.

3. Vorrichtung nach einem beliebigen der Ansprüche 1 oder 2, **dadurch gekennzeichnet, dass** das Heizsystem (6) sich über das untere Viertel der Außenfläche (S) des Behälters (2) erstreckt.

4. Vorrichtung nach einem beliebigen der Ansprüche 1 bis 3, **dadurch gekennzeichnet, dass** die Flussrate des abgezapften Gases im Bereich von 1 kg/h bis 100 kg/h, vorzugsweise von 10 kg/h bis 50 kg/h, liegt.

5. Vorrichtung nach einem beliebigen der Ansprüche 1 bis 4, **dadurch gekennzeichnet, dass** das Fassungsvermögen des Behälters (2) im Bereich von 1 Tonne bis 100 Tonnen, vorzugsweise von 10 Tonnen bis 40 Tonnen, liegt.

## Claims

1. Device (1) for storing and distributing a flow greater than or equal to 1 kg/h of a high-purity pressurised liquefied gas comprising:
- a vessel (2) containing a liquefied phase (G_{L}) of said gas in its lower part (3) and a gaseous phase (G_{g}) of said gas in its upper part (4),
- a system (5) for drawing off the gaseous phase (G_{g}) of said gas,
- a heating system (6) for maintaining a constant pressure of the gas at the point of use,
**characterised in that** the heating system (6) consists of a circulation of a hot fluid (F) in a circuit incorporated on the outer surface (S) of the vessel (2), which circuit comprises tubes (7) on the outer surface (S) of the vessel (2).

2. Device according to claim 1, **characterised in that** the tubes (7) and the vessel (2) are made of stainless steel.

3. Device according to either claim 1 or claim 2, **characterised in that** the heating system (6) is distributed over the lower quarter of the outer surface (S) of the vessel (2).

4. Device according to any of claims 1 to 3, **characterised in that** the flow of the gas which is withdrawn is between 1 kg/h and 100 kg/h, preferably between 10 kg/h and 50 kg/h.

5. Device according to any of claims 1 to 4, **characterised in that** the capacity of the vessel (2) is between 1 tonne and 100 tonnes, preferably between 10 tonnes and 40 tonnes.
